# FASCICULE DE BREVET EUROPEEN

(11) **EP 0 715 988 B1**
(45) Date de publication et mention de la délivrance du brevet: **06.10.1999**
(21) Numéro de dépôt: 95402508.6
(22) Date de dépôt: 09.11.1995
(51) Int. Cl.: B60Q 1/26, F21Q 1/00

(54) **Feux arrière de véhicules automobiles**
Rücklicht für Fahrzeuge
Tail-light for vehicle

(30) Priorité: 06.12.1994 FR 9414644
(43) Date de publication de la demande: 12.06.1996
(73) Titulaire: COMPAGNIE D'EQUIPEMENTS AUTOMOBILES AXO SCINTEX, F-91300 Villemoisson-sur-Orge (FR)
(72) Inventeur: Mauviere, Jean-Paul, F-27180 Les Baux Sainte-Croix (FR)
(74) Mandataire: Faber, Jean-Paul

(56) Documents cités:
- EP-A- 0 442 095
- EP-A- 0 531 960
- FR-A- 2 659 609

## Description

La présente invention se rapporte à des feux de signalisation pour véhicules automobiles.

Les feux arrière d'un véhicule automobile comprennent généralement une glace extérieure translucide de couleur rouge avec une partie catadioptrique, une partie cristal et une partie ambre. Derrière la glace sont fixés un réflecteur et un support de lampes, le réflecteur comportant une série de compartiments correspondant aux différentes fonctions des lampes, clignotant, lanterne, stop, phare de recul.

La glace comprend de plus une partie catadioptrique qui comporte une plaquette de protection la mettant à l'abri de la poussière.

Ainsi, la glace extérieure, compte tenu de ces différentes couleurs et des différents reliefs qu'elle comporte sur sa face interne, a un aspect très inesthétique.

La présente invention a notamment pour but de réaliser un feu arrière de véhicule qui soit d'un prix de revient correspondant à ceux connus tout en étant beaucoup plus esthétique.

La technique antérieure connaît la demande de brevet européen n° 0 531 960. Cette demande décrit un feu arrière qui comprend un réflecteur avec une série de compartiments correspondant aux différentes fonctions, un écran disposé devant le réflecteur et une glace masquant l'ensemble.

Dans cette réalisation, l'écran est constitué par une plaque transparente qui présente, sur sa face tournée en regard de la glace, des lignes parallèles de prismes doubles formés par des rainures en forme de V, tandis que la glace, sur sa face tournée en regard de l'écran, comporte, au droit des lignes de prismes doubles, des lignes de prismes et, entre ces dernières, des lentilles toriques. Les parties de l'écran situées entre les lignes de prismes doubles n'exercent aucun effet de diffraction optique.

Ainsi, les prismes doubles dévient les rayons lumineux vers les lentilles toriques qui engendrent une dispersion verticale.

Une telle disposition répond parfaitement à des buts esthétiques car la glace présente un aspect uniforme, mais la dispersion verticale des rayons lumineux, si elle s'accorde bien à la réalisation du feu arrière de brouillard, nuit aux autres fonctions et, vraisemblablement, pour remédier à cet inconvénient, il est prévu dans cette demande de brevet européen d'adjoindre sur la surface de l'écran, tourné en regard de la lampe, une lentille de Fresnel ce qui, bien entendu, rend la fabrication plus complexe.

Le feu arrière de signalisation, selon l'invention, remédie à ces inconvénients et est du type comprenant un réflecteur présentant des compartiments correspondant aux différentes fonctions telles que lanterne, feu de changement de direction, stop, feu de recul, un écran disposé devant le réflecteur et une glace masquant l'ensemble, la totalité de la surface interne de ladite glace comportant une optique d'aspect catadioptrique formée de lignes de prismes parallèles, tandis que l'écran comporte une optique propre à canaliser le flux lumineux entre lesdites lignes de prismes parallèles, ledit feu étant caractérisé en ce que l'optique d'aspect catadioptrique de la glace comprend, entre les lignes de prismes, des lentilles cylindriques concaves, tandis que l'écran comporte, au droit des lignes de lentilles cylindriques concaves, des lignes de lentilles formées par des godrons.

Grâce à une telle disposition, on réalise une glace qui, vue de l'extérieur, présente une uniformité, les différentes fonctions étant assurées avec une bonne dispersion horizontale de la lumière.

Suivant un mode de réalisation particulier, la glace présente une couleur uniforme rouge, tandis que l'écran comporte des parties cristal au droit des fonctions stop et lanterne, bleue au droit de la fonction feu de recul et verte au droit de la fonction changement de direction.

Ainsi, la glace ne présente qu'une seule couleur rouge, les différentes fonctions étant néanmoins assurées.

Suivant une variante de réalisation, la glace présente une partie ambre fumé au droit des fonctions feu de recul et changement de direction, l'écran, au droit de ses fonctions, présentant une partie cristal pour le feu de recul et une partie jaune au droit du feu de changement de direction.

L'invention va maintenant être décrite avec plus de détails en se référant à des modes de réalisation particuliers donnés à titre d'exemple seulement et représentés aux dessins annexés, dans lesquels :
Figure 1 est une vue en perspective éclatée d'un feu arrière de véhicule, selon l'invention.
Figure 2 montre à plus grande échelle la surface catadioptrique de la glace extérieure.
Figure 3 montre à plus grande échelle une partie de la surface de l'écran.
Figure 4 est une vue en coupe suivant la ligne 4-4 de la figure 1.
Figure 5 est une vue en coupe suivant la ligne 5-5 de la figure 1.
Figure 6 montre en perspective éclatée une variante de réalisation.

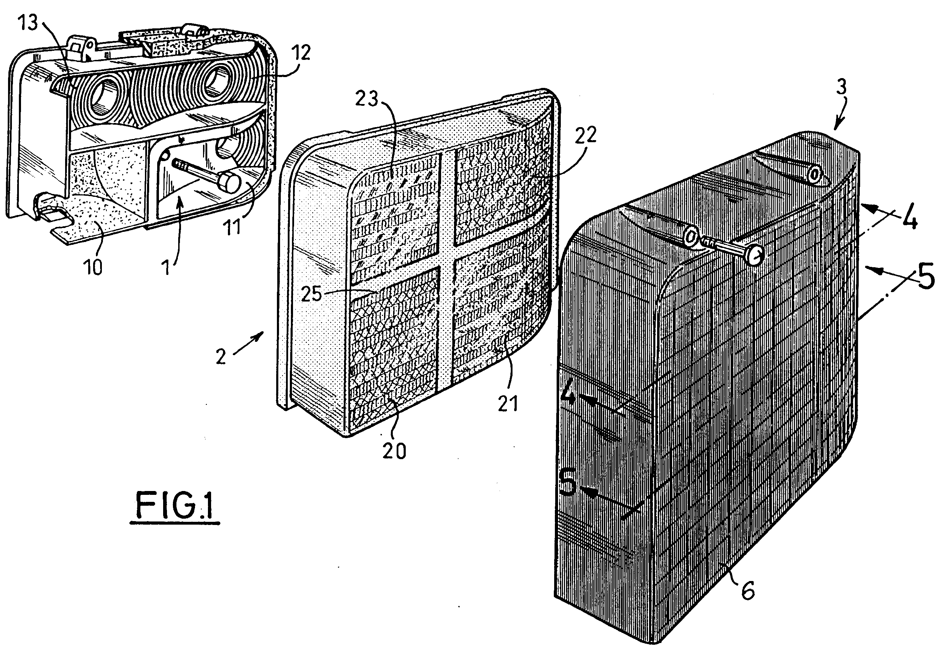

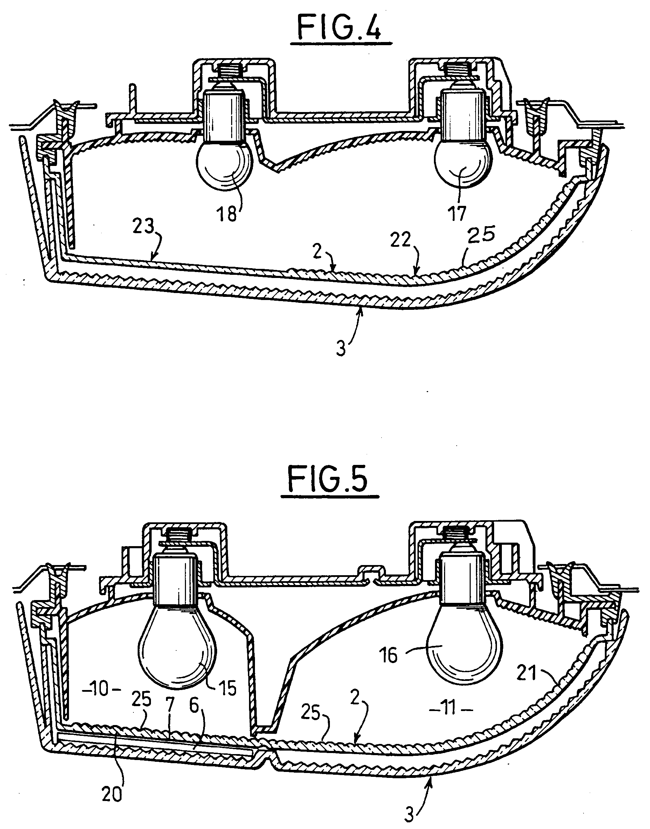

Le feu de signalisation des figures 1 à 5 comprend un réflecteur 1, un écran 2 et une glace extérieure 3.

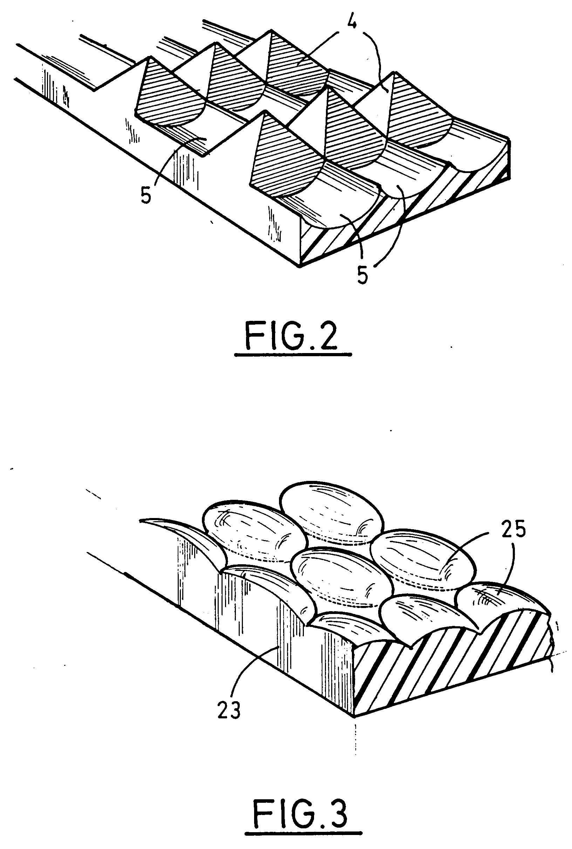

La glace extérieure 3 est réalisée en matière plastique translucide rouge uniformément et présente, sur sa face interne (voir figure 2), des séries de prismes horizontaux parallèles 4 alternées avec des séries de lentilles cylindriques concaves 5.

Sur une partie 6 de la surface interne de la glace est fixée une plaquette 7 de manière à former le catadioptre, la plaquette 7 protégeant celui-ci.

Le réflecteur 1, d'une manière connue, comprend quatre compartiments 10, 11, 12 et 13 dans lesquels sont logées des lampes respectivement 15, 16, 17 et 18, ces lampes étant reliées à des circuits électriques d'alimentation convenables.

Le compartiment 10 correspond à la fonction stop, le compartiment 11 à la fonction indicateur de changement de direction (clignotant) et les compartiments 12 et 13 aux fonctions lanterne et feu de recul.

L'écran 2 disposé entre le réflecteur 1 et la glace 3 comprend différentes parties 20, 21, 22 et 23, la partie 20 étant incolore, soit cristal, tandis que la partie 21 présente une couleur verte, la partie 23 une couleur bleue et la partie 22 également cristal.

Afin de favoriser le passage de la lumière à travers la glace 3 dans les parties 6, l'écran 2 (voir figure 3) présente, soit sur sa face interne, soit, sur sa face externe, des lignes de godrons horizontaux 25 situées en regard des lignes de lentilles 5.

Grâce à cette disposition, la glace 3 peut avoir, d'une part, une couleur uniforme et, d'autre part, un aspect uniforme puisque toute sa surface interne est formée d'une optique d'aspect catadioptrique, le feu présentant, néanmoins lors de l'utilisation les aspects correspondant à la réglemention, soit orangé en regard du clignotant, rouge en regard du stop et du feu arrière ou lanterne et cristal en regard du feu de recul.

On peut, bien sûr, rajouter les différentes autres fonctions, par exemple, feu arrière à allumer en cas de brouillard, l'écran 2 comportant alors une partie cristal ou rouge supplémentaire avec des godrons 25.

On peut également prévoir que les lignes de prismes 4 et les lignes de lentilles 5 s'étendent verticalement, mais dans ce cas, les godrons 25 sont également verticaux.

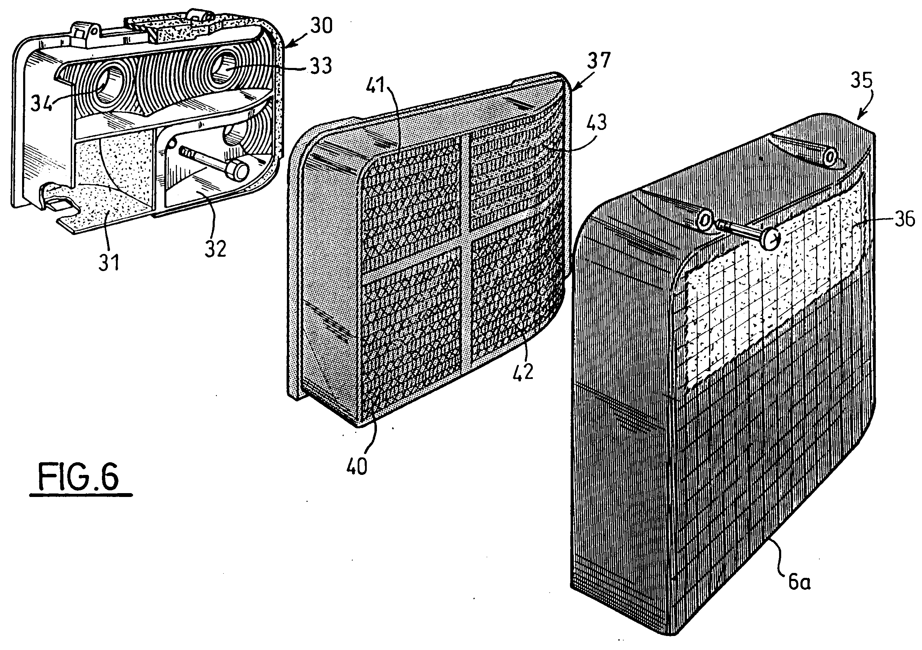

La figure 6 montre une variante de réalisation de l'invention.

Dans ce mode de réalisation, le réflecteur 30 comporte quatre compartiments 31 à 34, les compartiments 31 et 32 correspondant respectivement aux fonctions stop et lanterne, tandis que les compartiments 33 et 34 se rapportent aux fonctions clignotant et feu de recul.

La glace qui est désignée ici par la référence 35 comporte, sur sa face interne, la même disposition que la glace 3, soit des lignes horizontales alternées de prismes 4 et de lentilles 5; toutefois une partie 36 de sa surface est de couleur ambre, tandis que le reste de la surface est rouge. Il est également prévu une partie 6a constituant le catadioptre et correspondant à la partie 6 du premier mode de réalisation.

Entre le réflecteur 30 et la glace 35 est disposé un-écran 37 qui est divisé en quatre parties correspondant aux compartiments 31 à 34, soit trois parties cristal 40, 41 et 42 et une partie jaune 43. Toutes ces parties comportent des lignes de godrons correspondant aux godrons 25 et tournées soit du côté des lampes, soit au contraire, du côté de la glace 35.

Ainsi, en regard de la partie fermée 36, la fonction recul sera cristal, tandis que la fonction clignotant présentera la couleur orangée, les autres fonctions stop et feu arrière étant rouges.

## Revendications

1. Feux arrière de signalisation pour véhicules automobiles du type comprenant un réflecteur (1, 30) présentant des compartiments (10, 11, 12, 13, 31, 32, 33, 34) correspondant aux différentes fonctions telles que lanterne, feu de changement de direction, stop, feu de recul, un écran (2, 37) disposé devant le réflecteur (1, 30) et une glace (3, 35) masquant l'ensemble, la totalité de la surface interne de la glace comportant une optique d'aspect catadioptrique avec des lignes parallèles de prismes (4), tandis que l'écran (2, 37) comporte une optique propre à canaliser le flux lumineux entre les lignes de prismes, caractérisés en ce que l'optique d'aspect catadioptrique de la glace (3) comprend, entre les lignes de prismes (4), des lentilles cylindriques concaves (5), tandis que l'écran (2) comporte, au droit des lignes de lentilles cylindriques concaves, des lignes de lentilles formées par des godrons (25).

2. Feux arrière de signalisation pour véhicules automobiles, selon la revendication 1, caractérisés en ce que la glace (3) présente une couleur uniforme rouge, tandis que l'écran (2) comporte des parties cristal au droit des fonctions stop et lanterne, bleues au droit de la fonction feu de recul et vertes au droit de la fonction changement de direction.

3. Feux arrière de signalisation pour véhicules automobiles, selon la revendication 1, caractérisés en ce que la glace (35) présente une partie ambre fumé au droit des fonctions feu de recul et changement de direction, l'écran (37) au droit de ses fonctions présentant une partie cristal pour le feu de recul et une partie jaune au droit du feu de changement de direction.

## Claims

1. A signal tail-light for motor vehicles of the type comprising a reflector (1, 30) having compartments (10, 11, 12, 13, 31, 32, 33, 34) corresponding to the various functions such as lamp, direction changing light, stop light, reversing light, a screen (23, 37) disposed in front of the reflector (1, 30) and a glass (3, 35) masking the unit, the entire internal surface of the glass comprising an optical system having a catadioptric appearance with parallel lines of prisms (4), whereas the screen (2, 37) has a optical system capable of channelling the luminous flux between the lines of prisms,
**characterised in that** the optical system of catadioptric appearance of the glass (3) comprises, between the prism lines (4), concave cylindrical lenses (5), whereas the screen (2) comprises, to the right of the lines of concave cylindrical lenses, lines of lenses formed by boss beading (25).

2. A signal tail-light for motor vehicles, according to Claim 1,
**characterised in that** the glass (3) has a uniform red colour, whereas the screen (2) has clear portions to the right of the stop and lamp functions, blue to the right of the reversing light function and green to the right of the direction changing function.

3. A signal tail-light for motor vehicles, according to Claim 1,
**characterised in that** the glass (35) has a smoked amber portion to the right of the reversing light and direction changing functions, the screen (37) to the right of its functions having a clear portion for the reversing light and a yellow portion to the right of the direction changing light.

## Patentansprüche

1. Signalrücklicht für Kraftfahrzeuge vom Typ, der einen Reflektor (1, 30) umfaßt, der Abteilungen (10, 11, 12, 13, 31, 32, 33, 34) aufweist, die verschiedenen Funktionen entsprechen, so wie Schlußleuchte, Blinkleuchte, Bremsleuchte, Rückfahrleuchte, wobei ein Schirm (2, 37) vor dem Reflektor (1, 30) angeordnet ist und eine Scheibe (3, 35) das Ganze abdeckt, wobei die gesamte innere Oberfläche der Scheibe eine Optik mit katadioptrischem Aussehen mit parallelen Linien von Prismen (4) aufweist, während der Schirm (2, 37) eine Optik aufweist, die geeignet ist, den Lichtstrom zwischen den Linien von Prismen zu kanalisieren, dadurch gekennzeichnet, daß die Optik mit katadioptrischem Aussehen der Scheibe (3) zwischen den Linien von Prismen (4) zylindrische, konkave Linsen (5) aufweist, während der Schirm (2) nahe bei den Linien der zylindrischen, konkaven Linsen Linien von Linsen aufweist, die von Eierleisten (25) gebildet sind.

2. Signalrücklicht für Kraftfahrzeuge gemäß Ansprüch 1, dadurch gekennzeichnet, daß die Scheibe (3) eine einheitliche rote Farbe aufweist, während der Schirm (2) nahe bei den Funktionen Bremsleuchte und Schlußleuchte kristalline, nahe bei der Funktion Rückfahrleuchte blaue und nahe bei der Funktion Blinkleuchte grüne Teile aufweist.

3. Signalrücklicht für Kraftfahrzeuge gemäß Anspruch 1, dadurch gekennzeichnet, daß die Scheibe (35) nahe bei den Funktionen Rückfahrleuchte und Blinkleuchte einen rauchbernsteinfarbigen Teil aufweist, daß der Schirm (37) nahe bei diesen Funktionen einen kristallinen Teil für die Rückfahrleuchte und nahe bei der Blinkleuchte einen gelben Teil aufweist.
